# EUROPÄISCHE PATENTSCHRIFT

(11) **EP 2 563 640 B1**
(45) Veröffentlichungstag und Bekanntmachung des Hinweises auf die Patenterteilung: **02.04.2014**
(21) Anmeldenummer: 11716872.4
(22) Anmeldetag: 19.04.2011
(51) Int. Cl.: B62D 15/02

(54) **EINPARKSYSTEMEN MIT LÄNGS- UND QUERFÜHRUNG**
PULL-IN PARKING SYSTEM HAVING LONGITUDINAL AND TRANSVERSE GUIDING
SYSTÈMES DE STATIONNEMENT À GUIDAGE LONGITUDINAL ET LATÉRAL

(30) Priorität: 28.04.2010 DE 102010028330
(43) Veröffentlichungstag der Anmeldung: 06.03.2013
(73) Patentinhaber: Robert Bosch GmbH, 70442 Stuttgart (DE)
(72) Erfinder: STAACK, Jochen, 70178 Stuttgart (DE)
(86) Internationale Anmeldenummer: PCT/EP2011/056218
(87) Internationale Veröffentlichungsnummer: WO 2011/134843

(56) Entgegenhaltungen:
- EP-A1- 2 159 121
- EP-A2- 1 862 376
- DE-A1-102005 037 468
- US-A1- 2007 146 166
- US-A1- 2008 154 464
- US-A1- 2009 085 771

## Beschreibung

### Stand der Technik

Die Erfindung betrifft ein Verfahren in einem Einparksystem zur Unterstützung eines Einparkens mit einer Längsführung und einer Querführung, und ein solches Einparksystem.

Ein Einparksystem (bzw. Einparkassistent) unterstützt den Fahrer beim Einparken. Es wird beispielsweise während der Vorbeifahrt an einer Parklücke dieselbe vermessen und anschließend wird der Fahrer mittels Hinweisen in die Parklücke geführt. Das Führen in die Parklücke kann dabei in passiver Form geschehen, d.h. der Fahrer bekommt Lenkwinkelvorgaben sowie Losfahr- und Anhaltebefehle übermittelt. Der Einparkassistent kann aber das Einparken auch aktiv übernehmen, wobei der Fahrer lediglich Losfahr- bzw. Anhaltevorgaben erhält und eine Führung mindestens teilweise automatisch durch das System vorgenommen wird. Bei einer Längsführung wird das Brems- und Antriebssystem des Fahrzeugs automatisch angesteuert. Bei einer Querführung wird eine Lenksteuerung durch den Einparkassistenten automatisch angesteuert.

Während bisher überwiegend passive oder teilautomatische Einparksysteme verfügbar sind, die entweder nur eine Längsführung oder nur eine Querführung übernehmen, steht zu erwarten, dass in Zukunft Einparksysteme mit Längs- und Querführung in Fahrzeugen vorhanden sein werden.

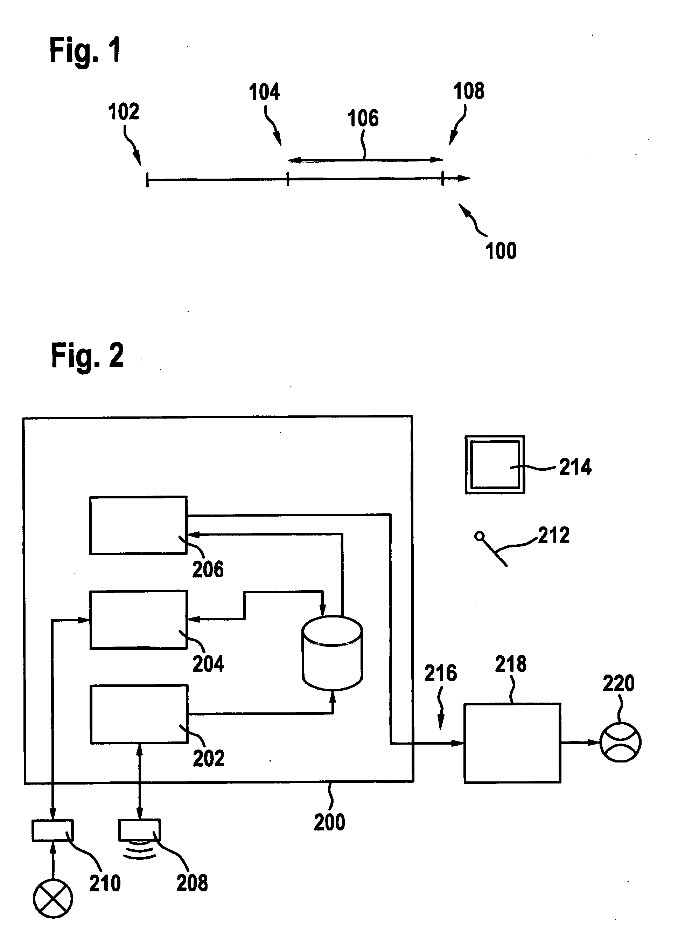

Ein Einparkmanöver basiert üblicherweise auf einer berechneten Einparktrajektorie mit mindestens einem Stopppunkt, an dem ein Zugwechsel (rückwärts → vorwärts, bzw. vorwärts → rückwärts) und ein Umlenken erforderlich ist. Für Systeme mit reiner Querführung ist es bekannt, dass das Umlenken durch einen Gangwechsel des Fahrers ausgelöst wird, wie er beim Richtungswechsel zwischen zwei Zügen notwendig ist. Der zeitliche Ablauf wird in Fig. 1 veranschaulicht. Auf einer Zeitachse 100 markiert der Punkt 102 das Erreichen eines Stopppunktes. Nachdem der Fahrer registriert hat, dass der Stopppunkt erreicht ist, führt der Fahrer zum Zeitpunkt 104 einen Gangwechsel durch. Dies wird durch das Einparksystem detektiert und im Zeitraum 106 wird ein automatisches Umlenken durch das Einparksystem durchgeführt. Somit ist das Fahrzeug zum Zeitpunkt 108 bereit für den nächsten Zug.

Es besteht ein genereller Bedarf, die für ein Einparkmanöver benötigte Einparkzeit so kurz wie möglich zu halten. So stellen Längs- wie Querparkmanöver häufig eine Behinderung für andere Verkehrsteilnehmer dar, indem eine Fahrspur blockiert und/oder ein Ausschwenken auf eine andere Fahrspur erforderlich ist. Derartige Behinderungen sollten so minimal wie möglich sein.

Bezogen auf die in Fig. 1 dargestellte Verweildauer an einem Stopppunkt ist anzumerken, dass viele Fahrer hierbei ungeduldig werden, weil beim assistierten Umlenken in diesem Moment für den Fahrer nichts zu tun ist. Dadurch verlängert sich auch in der subjektiven Wahrnehmung die Verweildauer am Stopppunkt. Diese Wahrnehmung verstärkt sich entsprechend bei Einparkmanövern mit mehreren Stopppunkten.

In der US 6,059,063 wird ein automatisches Steuerungssystem für ein Fahrzeug beschrieben. Das Fahrzeug wird an einer Startposition gestoppt. Der Fahrer betätigt einen Knopf, um einen bestimmten Einparkmodus anzuwählen. Daraufhin steuert das Steuerungssystem einen Antrieb und eine Lenkung an, um einen vorgegebenen Standardlenkwinkel einzustellen. Danach wird das Fahrzeug gemäß eines vorgegebenen Standardeinparkmanövers in eine angestrebte Parkposition geführt.

Das Dokument US 2008 154 464 A1 ist als nächstliegender Stand der Technik nach dem Oberbegriff des Anspruchs 1 zu sehen.

Eine Aufgabe der Erfindung besteht darin, ein Verfahren in einem Einparksystem zur Unterstützung eines Einparkens mit einem Längs- und einer Querführung vorzuschlagen, sowie ein derartiges System vorzuschlagen, bei dem die Verweildauer an einem Stopppunkt minimiert wird.

### Allgemeine Darstellung der Erfindung

Erfindungsgemäß wird ein Verfahren in einem Einparksystem zur Unterstützung eines Einparkens mit einer Längsführung und einer Querführung vorgeschlagen, welches die folgenden Schritte aufweist: Berechnen einer Einparktrajektorie mit mindestens einem Stopppunkt; Erfassen, unabhängig von Fahreraktionen, dass der berechnete Stopppunkt erreicht ist; und Bereitstellen, in Reaktion auf die Erfassung, eines Signals zum Umlenken für eine Lenksteuerung.

Die Erfindung basiert - unter anderem - auf der überraschenden Erkenntnis, dass zumindest bei einem Einparksystem mit Längsführung die Verweildauer am Stopppunkt auf einfache Weise minimiert werden kann. Ein solches System ermöglicht das Erfassen, dass ein berechneter Stopppunkt erreicht ist, auf Basis von Sensorwerten wie sie ohnehin erfasst werden, etwa zur Planung der Einparktrajektorie oder für andere Fahrerassistenzsysteme. Die Sensordaten können etwa eine Umgebung des Fahrzeugs, einen Zustand eines oder mehrerer Räder, des Bremssystems, und/oder eines Antriebs des Fahrzeugs betreffen.

Die Detektion eines fahrer-initiierten Gangwechsels wird dadurch ebenso überflüssig wie die Detektion beliebiger anderer Aktionen des Fahrers, bspw. einer das Einparksystem betreffenden Betätigung des Fahrers wie etwa einen Knopfdruck auf einen mechanischen Knopf oder einen Soft-Key auf einer Anzeige, oder eine akustische Eingabe, mit denen ein Fahrer in einem herkömmlichen System ein Einparkmanöver und/oder ein Umlenken initiieren muss.

Wie aus Fig. 1 ersichtlich, besteht die Verweildauer am Stopppunkt zu einem Teil auch aus der Reaktionszeit, die der Fahrer benötigt, um zu erkennen, dass der Stopppunkt erreicht ist. Da erfindungsgemäß nicht auf eine Aktion des Fahrers gewartet werden muss, verkürzt sich die Verweildauer am Stopppunkt auch um diese Reaktionszeit des Fahrers. Insgesamt kann so eine objektiv wie subjektiv deutliche Verkürzung der Zeit erreicht werden, die das Fahrzeug am Stopppunkt verweilt.

Da auf eine Detektion von Fahreraktionen verzichtet wird, vereinfacht sich das erfindungsgemäße Einparksystem im Vergleich zu herkömmlichen Systemen. Die Einparktrajektorie kann mehrere Stopppunkte umfassen. Nach jedem Erfassen eines der mehreren Stopppunkte kann jeweils ein entsprechendes Signal zum Umlenken bereitgestellt werden. Die Vorteile der Erfindung werden umso größer, je mehr automatisch geführte Züge ein Einparkmanöver aufweist, da sich in entsprechender Weise die Gesamtdauer des Einparkmanövers verringert.

Die Einparktrajektorie kann einen automatisch geführten Zug unmittelbar vor und/oder unmittelbar nach dem Stopppunkt umfassen. Befindet sich der Stopppunkt bspw. inmitten in einer vorausberechneten Einparktrajektorie, kann das Einparksystem unmittelbar erfassen, ob der vorausberechnete Stopppunkt erreicht wurde, und kann unmittelbar nach erfolgtem Umlenken mit der Einleitung des nächsten Zuges beginnen, was die Verweildauer am Stopppunkt nochmals minimiert.

Das Signal zum Umlenken kann insbesondere vor einem fahrer-initiierten Gangwechsel oder einer sonstigen Aktion des Fahrers bereitgestellt werden. Führt der Fahrer den Gangwechsel aus, während das Umlenken vollzogen wird, verkürzt sich die Verweildauer am Stopppunkt. Insbesondere verkürzt sich auch die subjektive am Stopppunkt verbrachte Zeit für den Fahrer.

Das Signal zum Umlenken kann ein Umlenken im Stand betreffen. Hierdurch wird ein robusteres, d.h. zuverlässigeres und einfacheres Verhalten des Einparksystems erzielt, dem ein Fahrer auch subjektiv mehr Vertrauen entgegenbringen kann.

Erfindungsgemäß wird weiterhin ein Computerprogramm zur Durchführung eines der hier beschriebenen Verfahren vorgeschlagen, wenn das Computerprogramm auf einer programmierbaren Computereinrichtung ausgeführt wird. Bei dieser Einrichtung kann es sich beispielsweise um einen programmierbaren Mikroprozessor, eine anwendungsspezifische, integrierte Schaltung und/oder einen digitalen Signalprozessor mit zugeordnetem Speicher handeln, der in einem Fahrzeug eingebaut ist. Zumindest Teile des Computerprogramms können in Form von folgen von Instruktionen auf einem maschinenlesbaren Datenträger gespeichert sein, etwa einem permanenten oder wiederbeschreibbaren Speicher in oder in Zuordnung zu einer programmierbaren Computereinrichtung, oder einer entfernbaren CD-ROM, DVD oder einem USB-Stick. Das Computerprogramm kann zusätzlich oder alternativ auch zum Herunterladen auf eine programmierbare Computereinrichtung vorgesehen sein, zum Beispiel über ein Datennetzwerk wie etwa das Internet oder eine Kommunikationsverbindung wie etwa eine Telefonverbindung oder eine drahtlose Verbindung.

Erfindungsgemäß wird weiterhin ein System zur Unterstützung eines Einparkens mit einer Längsführung und einer Querführung vorgeschlagen, welches die folgenden Komponenten aufweist: eine Komponente zum Berechnen einer Einparktrajektorie mit mindestens einem Stopppunkt; eine Komponente zum Erfassen, unabhängig von Fahreraktionen, dass der berechnete Stopppunkt erreicht ist, und eine Komponente zum Bereitstellen, in Reaktion auf die Erfassung, eines Signals zum Umlenken für eine Lenksteuerung. Bei dem System kann es sich beispielsweise um ein Einparksystem handelt, welches in ein Fahrerassistenzsystem für ein Fahrzeug integriert ist.

### Kurze Beschreibung der Figuren

Weitere Aspekte und Vorteile der Erfindung werden nunmehr anhand der beigefügten Figuren eingehender beschrieben. Hierbei zeigt:
- Fig. 1: eine schematische Illustration einer Verweildauer an einem Stopppunkt bei einem herkömmlichen Einparksystem;
- Fig. 2: in Form eines Blockschaltbildes funktionale Komponenten eines erfindungsgemäßen Einparksystems;
- Fig. 3: in Form eines Flussdiagramms eine Arbeitsweise des Einparksystems der Fig. 2;
- Fig. 4: in schematischer Form eine Einparktrajektorie zur weiteren Veranschaulichung der Arbeitsweise des Einparksystems der Fig. 2; und
- Fig. 5: eine Illustration der Verweildauer an einem Stopppunkt bei dem erfindungsgemäßen Einparksystem der Fig. 2.

### Ausführungsbeispiele

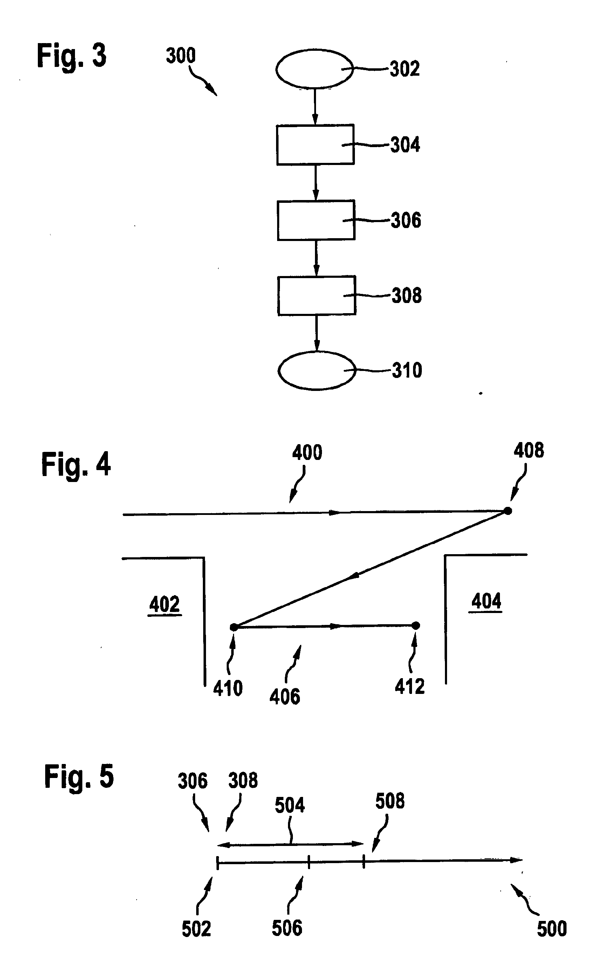

Fig. 2 zeigt ein Ausführungsbeispiel 200 eines efindungsgemäßen Einparksystems mit einer Berechnungseinrichtung 202, einer Erfassungseinrichtung 204, und eine Bereitstellungseinrichtung 206. Eine Arbeitsweise des Systems 200 wird nunmehr unter Bezugnahme auf das in Fig. 3 angedeutete Ablaufdiagramm 300, eine in Fig. 4 skizzierte beispielhafte Einparktrajektorie 400 und einen in Fig. 5 dargestellten zeitlichen Ablauf beschrieben. Das System 200 dient grundsätzlich zur Unterstützung eines Einparkens mit einer Längsführung und einer Querführung (302).

Gemäß der in Fig. 4 angedeuteten Situation befindet sich zwischen zwei pa rklückenbegrenzenden Objekten 402 und 404 eine Parklücke 406, in die ein nicht weiter dargestelltes Fahrzeug entlang der Trajektorie 400 einparkt. Die Trajektorie 400 enthält Stopppunkte 408, 410 und 412, wobei wenigstens an den Punkten 408 und 410 auch umzulenken ist. Spätestens ab dem Punkt 408 übernimmt das Einparksystem 200 die Längs- sowie Querführung des Fahrzeugs, so dass das Fahrzeug entlang von Zügen 414 und 416 automatisch geführt wird. Auf eine Arbeitsweise des Systems 200 in der Umgebung des Stopp- bzw. Umlenkpunktes 410 wird nunmehr besonders eingegangen.

In Schritt 304 berechnet die Berechnungseinrichtung 202 die Einparktrajektorie 400 mit wenigstens den Zügen 414 und 416 sowie den Stopppunkten 406 (bspw. kann der Einparkassistent 200 an diesem Punkt aktiviert werden), Umlenkpunkt 410 und Stopppunkt 412. Die Berechnungseinrichtung 202 kann hierzu beispielsweise auf Sensordaten, etwa eines in Fig. 2 schematisch angedeuteten Ultraschallsensors 208, zurückgreifen, die eine Umgebung des Fahrzeugs repräsentieren.

Nach Aktivierung des Einparksystems und Berechnung der Trajektorie 400 wird das Fahrzeug vom Einparksystem 200 entlang des Zuges 414 (zum Beispiel rückwärts) in die Parklücke 406 hineingeführt. In Schritt 306 erfasst die Erfassungseinrichtung 204, dass der berechnete Stopppunkt 410 erreicht ist. Hierzu kann die Einrichtung 204 beispielsweise auf in Fig. 2 schematisch angedeutete Radsensoren 210 zurückgreifen, um beispielsweise einen Stillstand des Fahrzeugs zu detektieren. Weitere Sensordaten, zum Beispiel vom Umgebungssensor 208, und/oder von Sensoren, die bspw. den Zustand eines Brems- und/oder Antriebssystems erfassen, können ebenfalls in der Einrichtung 204 verarbeitet werden.

Bei Erreichen des Stopppunktes 410 führt der Fahrer mindestens eine Aktion durch, nämlich eine Betätigung eines Ganghebels 212, um am Stopppunkt 410 einen Gangwechsel etwa in einen Vorwärtsgang vorzunehmen. Weitere Fahreraktionen am Stopppunkt 410 könnten etwa gemäß herkömmlicher Systeme die Betätigung eines Knopfes, einer Taste, oder beispielsweise eines Soft-Keys auf einem Anzeigeschirm 214 zur Steuerung des Einparksystems oder anderer im Fahrzeug befindlicher (Fahrerassistenz-)Systeme umfassen. Die Erfassungseinrichtung 204 erfasst jedoch das Erreichen des Stopppunktes 414 unabhängig von solchen oder beliebigen Aktionen des Fahrers, d.h. eine Detektierung von Fahreraktionen findet nicht statt.

In Schritt 308, der unmittelbar auf den Schritt 306 folgt, wird die Bereitstellungseinrichtung 206 von der Erfassungseinrichtung 204 angesteuert, um ein Signal 216 an eine Lenksteuerung 218 des Fahrzeugs auszugeben, damit die Lenksteuerung 218 ein Umlenken der Lenkung 220 in Vorbereitung des nächsten Zuges 416 durchführt. Mit Schritt 310 endet das Verfahren 300.

Eine zeitlicher Ablauf während der Verweildauer des Fahrzeugs am Stopppunkt 410 ist in Fig. 5 veranschaulicht. Die Darstellung ist der Vergleichbarkeit halber analog zur Darstellung in Fig. 1 gewählt. Auf einer Zeitachse 500 bezeichnet der Punkt 502 den Zeitpunkt des Erreichens des Stopppunktes 414. Zu diesem Zeitpunkt läuft der Schritt 306 (Erfassen des Erreichens des Stopppunktes 414) und unmittelbar danach der Schritt 308 (Signalausgabe an die Lenksteuerung 218) ab, so dass ein Umlenken der Lenkung 220 im Zeitraum 504 unmittelbar an das Erreichen des Stopppunktes 502 anschließend erfolgt. Während des Umlenkens im Zeitraum 504 kann der Fahrer etwa zum Zeitpunkt 506 einen Gangwechsel durchführen, wobei dieser Gangwechsel sich nicht auf die Arbeitsweise des Einparksystems 200 in den Schritten 306 und 308 auswirkt. Zum Zeitpunkt 508 ist das Umlenken beendet und das Fahrzeug ist unmittelbar bereit für den nächsten Zug 416.

Wie aus einem Vergleich der Figur 5 mit der Figur 1 unmittelbar hervorgeht, wird das Einparkmanöver durch das erfindungsgemäß arbeitende Einparksystem 200 beschleunigt, da das automatische Einparksystem 200 nicht mehr auf den Gangwechsel durch den Fahrer warten muss, sondern das Umlenken ummittelbar nach Erreichen des Stopppunktes einleitet. Wechselt der Fahrer während des Umlenkens den Gang, ist das Fahrzeug unmittelbar nach Beendigung des Umlenkens bereit für den nächsten Zug. Da ein Einparksystem mit Längsführung bereits über Sensorik zur Überwachung der Führung entlang einer Einparktrajektorie verfügt, ermöglicht die Erfindung hier auf überraschend einfache Weise eine Beschleunigung eines Einparkmanövers.

Als weiterer Vorteil ist die subjektive Verkürzung der Wartezeit während des Umlenkens für den Fahrer anzusehen. Dieser kann während des Umlenkens den Gang wechseln und braucht somit nicht untätig auf das Ende des Umlenkvorgangs zu warten.

Die oben beschriebenen Vorteile wirken sich entsprechend stärker bei Einparktrajektorien mit mehreren Stopp- und/oder Umlenkpunkten aus. Unter erneutem Bezug auf das in den Figuren 2 - 5 dargestellte Ausführungsbeispiel wird darauf hingewiesen, dass das erfindungsgemäß ausgebildete Einparksystem 200 auch ein Umlenken an den Punkten 408 und 412 steuern kann, auch wenn hier der zuführende Zug nicht automatisch erfolgt (408) bzw. kein weiterer Zug nach Erreichen des Stopppunktes 412 mehr erfolgt. Am Punkt 408 kann das Einparksystem 200 die Lenkung für den Zug 414 ausrichten, sobald nach Aktivierung des Einparksystems eine Einparktrajektorie berechnet ist, ohne auf das Einlegen des Rückwärtsganges durch den Fahrer warten zu müssen. Vielmehr könnte der Fahrer das beginnende Umlenken der Räder zum Anlass nehmen, den Rückwärtsgang einzulegen, so das sich auch hier ein Ablauf wie in Fig. 5 skizziert ergeben würde. Das Ausrichten der Räder im Stopppunkt 416, bspw. in eine vorgegebene Standardposition, kann als ein Komfortmerkmal eines Einparkassistenten angesehen werden.

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Verfahren in einem Einparksystem zur Unterstützung eines Einparkens mit einer Längsführung und einer Querführung, mit den folgenden Schritten:
- Berechnen (304) einer Einparktrajektorie (400) mit mindestens einem Stopppunkt (410);
- Erfassen (306), unabhängig von Fahreraktionen, dass der berechnete Stopppunkt (410) erreicht ist; und
- Bereitstellen (308), in Reaktion auf die Erfassung, eines Signals (216) zum Umlenken für eine Lenksteuerung (218),
**dadurch gekennzeichnet, dass** das Signal (216) zum Umlenken vor (502) einem fahrer-initiierten Gangwechsel (508) bereitgestellt wird.

2. Verfahren nach Anspruch 1,
**dadurch gekennzeichnet, dass**
die Einparktrajektorie (400) einen automatisch geführten Zug unmittelbar vor (414) und/oder unmittelbar nach dem Stopppunkt (416) umfasst.

3. Verfahren nach Anspruch 1 oder 2,
**dadurch gekennzeichnet, dass**
die Einparktrajektorie mehrere Stopppunkte umfasst und nach jedem Erfassen eines der mehreren Stopppunkte ein entsprechendes Signal zum Umlenken bereitgestellt wird.

4. Verfahren nach einem der vorhergehenden Ansprüche,
**dadurch gekennzeichnet, dass**
das Erfassen insbesondere unabhängig von einem fahrer-initiierten Gangwechsel und/oder einer das Einparksystem betreffenden Betätigung des Fahrers erfolgt.

5. Verfahren nach einem der vorhergehenden Ansprüche,
**dadurch gekennzeichnet, dass**
das Signal zum Umlenken (216) ein Umlenken im Stand betrifft.

6. Computerprogramm zur Durchführung des Verfahrens nach einem der vorhergehenden Ansprüche, wenn das Computerprogramm auf einer programmierbaren Computereinrichtung ausgeführt wird.

7. Maschinenlesbarer Datenträger, auf dem Instruktionen zur Durchführung eines Verfahrens nach einem der Ansprüche 1 bis 5 gespeichert sind, wenn die Instruktionen von einer Computereinrichtung ausgeführt werden.

## Claims

1. Method in a parking system for assisting parking with longitudinal guidance and lateral guidance, having the following steps:
- calculating (304) a parking trajectory (400) with at least one stop point (410);
- sensing (306), independent of driver actions, that the calculated stop point (410) is reached; and
- providing (308), in reaction to the sensing, a signal (216) for changing the steering angle for a steering controller (218),
**characterized in that** the signal (216) is provided for changing the steering angle before (502) a driver-initiated gearspeed change (508).

2. Method according to Claim 1,
**characterized in that**
the parking trajectory (400) comprises an automatically directed movement directly before (414) and/or directly after the stop point (416).

3. Method according to Claim 1 or 2,
**characterized in that**
the parking trajectory comprises a plurality of stop points, and a corresponding signal for changing the steering angle is provided each time one of the plurality of stop points is sensed.

4. Method according to one of the preceding claims,
**characterized in that**
the sensing takes place, in particular, independently of a driver-initiated gearspeed change and/or an activation process by the driver which relates to the parking system.

5. Method according to one of the preceding claims,
**characterized in that**
the signal for changing the steering angle (216) relates to changing the steering angle in a stationary state.

6. A computer program for carrying out the method according to one of the preceding claims when the computer program is executed on a programmable computer device.

7. Machine-readable data carrier on which instructions for carrying out a method according to one of Claims 1 to 5 are stored when the instructions are executed by a computer device.

## Revendications

1. Procédé dans un système d'entrée en stationnement pour l'assistance d'une entrée en stationnement avec un guidage longitudinal et un guidage transversal, comprenant les étapes suivantes :
- calcul (304) d'une trajectoire d'entrée en stationnement (400) avec au moins un point d'arrêt (410) ;
- détection (306), indépendamment des actions du conducteur, que le point d'arrêt (410) calculé est atteint ; et
- délivrance (308), en réaction à la détection, d'un signal (216) de changement de direction pour une commande de direction (218),
**caractérisé en ce que** le signal (216) de changement de direction est délivré avant (502) un changement de rapport (508) initié par le conducteur.

2. Procédé selon la revendication 1, **caractérisé en ce que** la trajectoire d'entrée en stationnement (400) comprend une traction à guidage automatique immédiatement avant (414) et/ou immédiatement après le point d'arrêt (416).

3. Procédé selon la revendication 1 ou 2, **caractérisé en ce que** la trajectoire d'entrée en stationnement comprend plusieurs points d'arrêt et un signal correspondant de changement de direction est délivré après chaque détection de l'un des plusieurs points d'arrêt.

4. Procédé selon l'une des revendications précédentes, **caractérisé en ce que** la détection s'effectue notamment indépendamment d'un changement de rapport initié par le conducteur et/ou d'un actionnement du conducteur qui concerne le système d'entrée en stationnement.

5. Procédé selon l'une des revendications précédentes, **caractérisé en ce que** le signal de changement de direction (216) concerne un changement de direction en l'état.

6. Programme informatique pour mettre en oeuvre le procédé selon l'une des revendications précédentes lorsque le programme informatique est exécuté sur un équipement informatique programmable.

7. Support de données lisible par machine sur lequel sont enregistrées des instructions pour mettre en oeuvre le procédé selon l'une des revendications 1 à 5 lorsque les instructions sont exécutées par un équipement informatique.
